# EUROPEAN PATENT APPLICATION

(11) **EP 2 261 792 A1**
(43) Date of publication of application: **15.12.2010**
(21) Application number: 10004983.2
(22) Date of filing: 11.05.2010
(51) Int. Cl.: G06F 3/14

(54) **Screen data transmission system and acquired user setting information**

(30) Priority: 12.06.2009 JP 2009140948
(71) Applicant: Sharp Kabushiki Kaisha, Osaka-shi, Osaka 545-8522 (JP)
(72) Inventor: Nakashima, Takashi, Osaka-shi Osaka 545-8522 (JP); Saitoh, Osamu, Osaka-shi Osaka 545-8522 (JP); Fukumoto, Keiji, Osaka-shi Osaka 545-8522 (JP)
(74) Representative: Müller - Hoffmann & Partner

(57) **Abstract**

To provide a screen data transmitting terminal, screen data receiving terminal, screen data transmission system, screen data transmitting program, screen data receiving program, screen data transmitting method and screen data receiving method for enabling a screen displayed in a terminal on the transmission side to be reproduced in a terminal on the reception side without undergoing effects of unnecessary information such as the panel state, etc., a screen data transmitting terminal 100 for transmitting data of a display screen has a transmission-side image tone reflecting section that reflects user setting information set by a user 150 in an image tone of received original image data, a transmission-side display section that displays a screen in which the user setting information is reflected, and a transmission-side screen data managing section that acquires the user setting information, where the transmission-side screen data managing section transmits the original image data and the acquired user setting information so as to enable a terminal 200 of a transmission destination to reproduce the display screen using the transmitted data.

## Description

### [Technical field to which invention relates]

The present invention relates to a screen data transmitting terminal for transmitting data of a display screen, screen data receiving terminal, screen data transmission system, screen data transmitting program, screen data receiving program, screen data transmitting method and screen data receiving method.

### [Indication of the background art]

In recent years, various kinds of equipment such as a TV and household electrical appliances have been connected via a network, and technical development has been made to remotely operate and monitor states of the equipment. For example, techniques of transmitting image data to a remote terminal to display include remote desktop, etc.

In such a technical field, even when the image data to transmit is the same, it is difficult to reproduce the same display screen due to differences in types and output characteristics between display devices. Then, it is required to correctly reproduce colors displayed on the transmission side. To cope with the requirement, there is a technique of sending the image data and monitor profile information of the display, performing display on the reception side in consideration of the monitor profile information, thereby overcoming the differences in types and output characteristics between devices, and reproducing the color displayed on the transmission side on the reception side.

However, in the aforementioned method, since it is not possible to view the setting information of the panel of each display in each terminal, there are cases that colors cannot be correctly reproduced due to differences in the setting information of the panel. To solve the aforementioned problem, in a screen data transmission system as described in Japanese Laid-Open Patent Publication No. 2002-218261, transmitted is a display image on the transmission side and screen data information that is measured and acquired by measuring a sample image displayed on a display screen using a colorimeter, and a display screen is generated to be the same as the display screen on the transmission side using the screen data information that is measured and acquired using a reception-side colorimeter, and the aforementioned data.

### [Technical problem to be solved]

However, in the above-mentioned method, it is necessary to display image data for measurement on a display screen of each of the transmission side and reception side. Then, the state of the panel of the display device such as a stain and glare of a portion to measure using a colorimeter may also be picked, the colorimetric data value thereby changes, and there is a possibility of transmitting erroneous screen display information.

The present invention was made in view of the aforementioned circumstances, and it is an object of the invention to provide a screen data transmitting terminal, screen data receiving terminal, screen data transmission system, screen data transmitting program, screen data receiving program, screen data transmitting method and screen data receiving method for enabling a screen displayed in a terminal on the transmission side to be reproduced in a terminal on the reception side without undergoing effects of unnecessary information such as the panel state, etc.

### [Disclosure of invention]

(1) To attain the above-mentioned object, a screen data transmitting terminal of the invention is a screen data transmitting terminal for transmitting data of a display screen, and is characterized by having a transmission-side image tone reflecting section that reflects user setting information set by a user in an image tone of received original image data, a transmission-side display section that displays a screen in which the user setting information is reflected, and a transmission-side screen data managing section that acquires the user setting information, where the transmission-side screen data managing section transmits the original image data and the acquired user setting information so as to enable a terminal of a transmission destination to reproduce the display screen using the transmitted original image data and user setting information. By this means, a terminal on the reception side is able to reproduce a screen that is displayed in a terminal on the reception side, without undergoing effects of unnecessary information such as the panel state, etc. As a result, the same screen is reproduced, and it is possible to find an error of user setting.

(2) Further, the screen data transmitting terminal of the invention is **characterized in that** the transmission-side image tone reflecting section reflects image quality information for determining image quality and panel information for determining characteristics of a panel for screen display in the image tone of the original image data, and that the transmission-side screen data managing section acquires the image quality information and the panel information, and transmits the original image data, the acquired user setting information, the image quality information and the panel information. By this means, it is possible to reflect the image quality information and panel information specific to the terminal to reproduce the screen.

(3) Furthermore, the screen data transmitting terminal of the invention is characterized by further having a display plane section that temporarily stores the original image data, and a capture section that captures the stored original image data. By this means, it is possible to capture only the original image data, and to omit redundant information.

(4) Still furthermore, the screen data transmitting terminal of the invention is characterized by further having an image compression section that compresses the captured original image data. Since the original image data and setting data is divided, it is possible to compress the original image, and efficient transmission/reception is made possible.

(5) Moreover, the screen data transmitting terminal of the invention is **characterized in that** the transmission-side screen data managing section manages timing of transmitting the original image data and the acquired user setting information. By this means, it is possible to transmit the data when the capture image data changes, or whenever the display frame is updated, and it is thus possible to perform efficient transmission and reception corresponding to the circumstances.

(6) Further, the screen data transmitting terminal of the invention is **characterized in that** the transmission-side screen data managing section displays that the original image data and the acquired user setting information is being transmitted in the transmission-side display section during transmission of the original image data and the acquired user setting information. By this means, the user is capable of recognizing that the screen data is being transmitted, and of talking while seeing the same screen as that of an operator.

(7) Moreover, a screen data receiving terminal of the invention is a screen data receiving terminal for receiving data of a display screen of a screen data transmitting terminal, and is characterized by having a reception-side communication section that receives original image data received in the screen data transmitting terminal and user setting information set by a user in the screen data transmitting terminal, a reception-side image tone reflecting section that reflects the user setting information in an image tone of the original image data, and a reception-side display section that displays a screen in which the user setting information is reflected, and enabling a display screen of the screen data transmitting terminal to be reproduced. By this means, the reception side is capable of reproducing the screen on the transmission side.

(8) Further, the screen data receiving terminal of the invention is **characterized in that** the reception-side communication section receives image quality information and panel information of the screen data transmitting terminal, and that the reception-side image tone reflecting section reflects the image quality information for determining image quality and the panel information for determining characteristics of a panel for screen display in the image tone of the original image data based on the received information. By this means, it is possible to reflect the image quality information and panel information specific to the terminal to reproduce the screen.

(9) Moreover, a screen data transmission system of the invention is characterized by having the screen data transmitting terminal as described above and the screen data receiving terminal as described above, where the screen data transmitting terminal undergoes remote control from the screen data receiving terminal. By this means, the operator is able to perform remote control while the user and operator are seeing the same screens.

(10) Further, a screen data transmitting program of the invention is a screen data transmitting program for transmitting data of a display screen, and is characterized by causing a screen data transmitting terminal to execute processing for acquiring user setting information set by a user and processing for transmitting received original image data and the acquired user setting information, and enabling a screen data receiving terminal to reproduce the display screen using the transmitted original image data and user setting information. By this means, it is possible to reproduce a screen that is displayed in the transmission-side terminal in the reception-side terminal, without undergoing effects of unnecessary information such as the panel state, etc.

(11) Furthermore, a screen data receiving program of the invention is a screen data receiving program for receiving data of a display screen of a screen data transmitting terminal, and is characterized by causing a screen data receiving terminal to execute processing for receiving original image data received in the screen data transmitting terminal and user setting information set by a user in the screen data transmitting terminal, processing for reflecting the user setting information in an image tone of the original image data, and processing for displaying a screen in which the user setting information is reflected, and enabling a display screen of the screen data transmitting terminal to be reproduced. By this means, a terminal on the reception side is able to reproduce a screen that is displayed in a terminal on the reception side, without undergoing effects of unnecessary information such as the panel state, etc.

(12) Still furthermore, a screen data transmitting method of the invention is a screen data transmitting method of transmitting data of a display screen in a screen data transmitting terminal, and is characterized by including a step of acquiring user setting information set by a user, and a step of transmitting received original image data and the acquired user setting information, and enabling a screen data receiving terminal to reproduce the display screen using the transmitted original image data and user setting information. By this means, it is possible to reproduce a screen that is displayed in the transmission-side terminal in the reception-side terminal, without undergoing effects of unnecessary information such as the panel state, etc.

(13) Moreover, a screen data receiving method of the invention is a screen data receiving method of receiving data of a display screen of a screen data transmitting terminal in a screen data receiving terminal, and is characterized by including a step of receiving original image data received in the screen data transmitting terminal and user setting information set by a user in the screen data transmitting terminal, a step of reflecting the user setting information in an image tone of the original image data, and a step of displaying a screen in which the user setting information is reflected, and enabling the display screen of the screen data transmitting terminal to be reproduced. By this means, a terminal on the reception side is able to reproduce a screen that is displayed in a terminal on the reception side, without undergoing effects of unnecessary information such as the panel state, etc.

According to the invention, it is possible to reproduce a screen that is displayed in the transmission-side terminal in the reception-side terminal, without undergoing effects of unnecessary information such as the panel state, etc.

### [Brief description of drawings]

FIG. 1 is a schematic view showing an example of a screen data transmission system according to the invention;
FIG. 2 is a block diagram illustrating a functional configuration of a screen data transmitting terminal according to the invention;
FIG. 3 is a block diagram illustrating a functional configuration of a screen data receiving terminal according to the invention;
FIG. 4 is a diagram showing a transmission packet example transmitted as screen data;
FIG. 5 is a flowchart showing the flow of transmission processing and reception processing of screen data according to Embodiment 1;
FIG. 6A is a diagram showing an example of screen display in the screen data transmitting terminal;
FIG. 6B is a diagram showing another example of screen display in the screen data transmitting terminal;
FIG. 7 is a diagram showing an example of screen data in the screen data receiving terminal; and
FIG. 8 is a flowchart showing the flow of transmission processing and reception processing of screen data according to Embodiment 2.

### [Description of at least one way of carrying out the invention]

Embodiments of the invention will be described below with reference to accompanying drawings. To facilitate understanding of descriptions, the same structural elements are assigned the same reference numerals in each figure to omit redundant descriptions.

### [Embodiment 1]

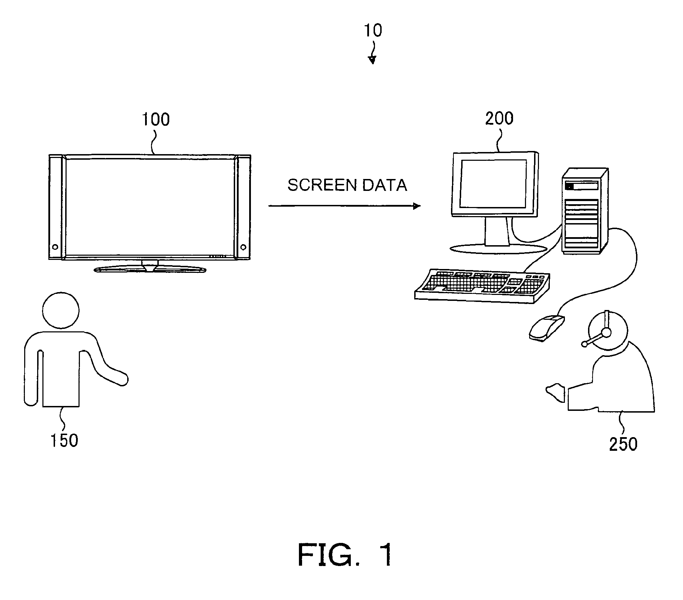

FIG. 1 is a schematic view showing an example of a screen data transmission system. The screen data transmission system 10 is provided with a screen data transmitting terminal 100 and screen data receiving terminal 200. In the example as shown in FIG. 1, the screen data transmitting terminal 100 is a television receiver, and the screen data receiving terminal 200 is an external PC. In the example as shown in FIG. 1, a user 150 requests an operator 250 for remote control using a telephone or the like, and screen data is transmitted to the screen data receiving terminal 200 from the screen data transmitting terminal 100 in the process of control of the operator 250.

Since the screen data is thus transmitted, the operator 250 is capable of seeing screen display of the screen data transmitting terminal 100 in the screen data receiving terminal 200, analyzing trouble, and performing remote control. In addition, the screen data transmission system 10 as shown in FIG. 1 is an example, and is not limited such a form. Further, the screen data is data to reproduce a screen displayed in the screen data transmitting terminal 100 in the screen data receiving terminal 200, and includes not only the original image data received in the screen data transmitting terminal 100 but also setting information of the screen.

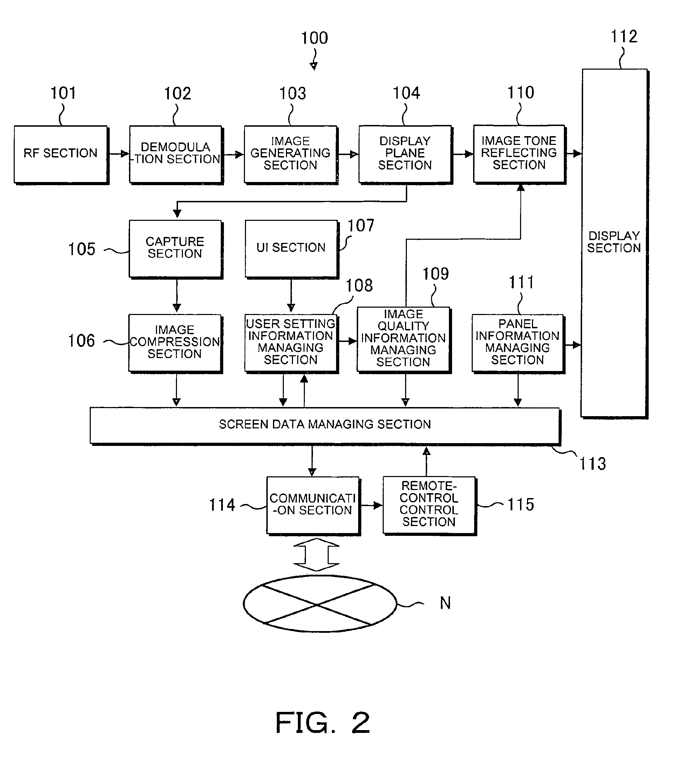

FIG. 2 is a block diagram illustrating a functional configuration of the screen data transmitting terminal 100 in the screen data transmission system 10. The screen data transmitting terminal 100 is comprised of an RF section 101, demodulation section 102, image generating section 103, display plane section 104, capture section 105, image compression section 106, UI section 107, user setting information managing section 108, image quality information managing section 109, image tone reflecting section 110, panel information managing section 111, display section 112, screen data managing section 113, communication section 114 and remote-control control section 115.

The RF section 101 receives a broadcast signal. The demodulation section 102 demodulates a received signal. The image generating section 103 generates image data based on the demodulated reception signal, and outputs the data to the display plane section 104 that is a buffer for display. The display plane section 104 stores the obtained image data.

The UI section 107 is a remote control, keyboard, mouse and the like, and receives operation of the user 150. For example, the section 107 is capable of receiving a change command for changing transmission-side user setting information. The user setting information managing section 108 manages transmission-side user setting information set in the UI section 107. For example, based on the change command received from the UI section 107 and the like, the section 108 changes "brightness", "dynamic", "brightness sensor", "image", "color tone", "AV position (normal, movie mode, game mode, etc.), "saturation", "hue", etc. Further, the section 108 outputs the user setting information managed therein to the image quality information managing section 109.

The image quality information managing section 109 receives the user setting information, and manages the transmission-side image quality information determined for each model. Further, the image quality information managing section 109 outputs the transmission-side image quality information managed therein to the image tone reflecting section 110 and screen data managing section 113.

The image tone reflecting section 110 generates a display screen based on the transmission-side image quality information and the screen data stored in the display plane section 104 to output to the display section 112. The panel information managing section 111 manages transmission-side panel information determined for each model. Then, the panel information managing section 111 outputs the transmission-side panel information to the display section 112 and screen data managing section 113.

The capture section 105 captures the screen data stored in the display plane section 104 to output to the image compression section 106. By this means, it is possible to capture only the original image data, and to omit redundant information. Thus, the original image data and setting data is divided, it is thereby possible to compress the original image data, and it is possible to perform efficient transmission/reception. The image compression section 106 compresses the image data received from the capture section 105, and outputs the data to the screen data managing section 113. The screen data managing section 113 outputs to the communication section 114 the captured original image data, transmission-side user setting information, transmission-side image quality information, and transmission-side panel information as the screen data. By this means, the screen data receiving terminal 200 is capable of reproducing the screen displayed in the screen data transmitting terminal 100 without undergoing effects of the unnecessary information such as the panel state, etc.

Moreover, the screen data receiving terminal 200 is capable of reproducing the screen while reflecting the image quality information and panel information specific to the terminal. Further, the screen data managing section 113 manages the timing of transmitting the screen data. By this means, it is possible to transmit the data when the captured original image data changes, or whenever the display frame is update, and thus perform efficient transmission/reception corresponding to the circumstances. Furthermore, the screen data managing section 113 displays that the screen data is being transmitted in the display section 112 during transmission of the screen data. By this means, the user is capable of recognizing that the screen data is being transmitted, and of talking while seeing the same screen as that of an operator. Still furthermore, when the screen data managing section 113 receives instructions for remote control, the section 113 executes remote control, and for example, changes the user setting information managed in the user setting information managing section 108.

The communication section 114 transmits the screen data to the screen data receiving terminal 200. The remote-control control section 115 receives instructions for remote control of the screen data receiving terminal 200 via the communication section 114, and provides instructions for remote control to the screen data managing section 113.

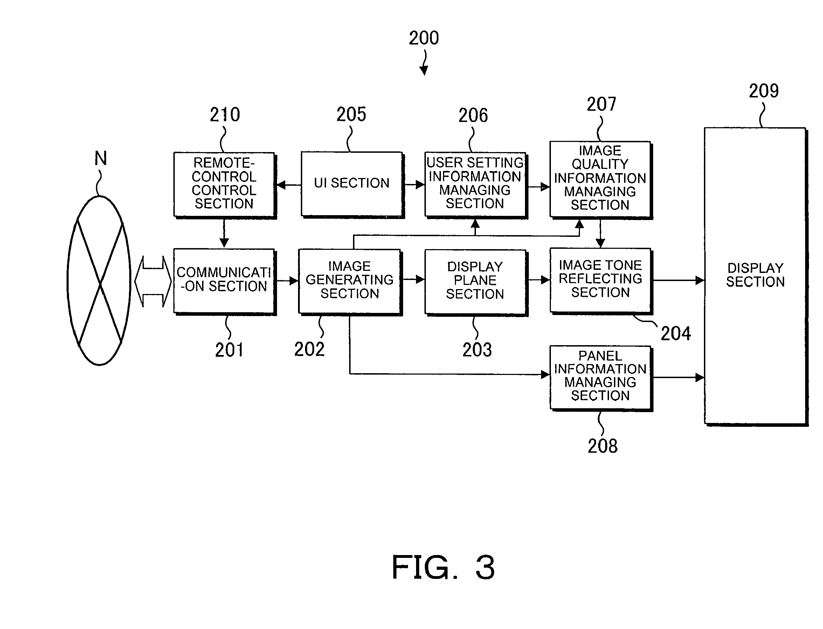

FIG. 3 is a block diagram illustrating a functional configuration of the screen data receiving terminal 200 in the screen data transmission system 10. The screen data receiving terminal 200 is comprised of a communication section 201, image generating section 202, display plane section 203, image tone reflecting section 204, UI section 205, user setting information managing section 206, image quality information managing section 207, panel information managing section 208, display section 209 and remote-control control section 210. In addition, the name overlaps between the communication section 201 and the communication section 114 on the transmission side, and others, and it is also possible to describe as the transmission-side communication section and reception-side communication section to distinguish, which is the same in the other sections. The screen data transmitting terminal 100 and screen data receiving terminal 200 are connected via a network N.

The communication section 201 receives screen data from the screen data transmitting terminal 100. Based on the screen data, the image generating section 202 outputs the original image data to the display plane section 203, and further outputs the transmission-side user setting information to the user setting information managing section 206. Moreover, the section 201 outputs the transmission-side image quality information to the image quality information managing section 207, and further outputs the transmission-side panel information to the panel information managing section 208.

The display plane section 203 is a buffer for display, and receives the original image data to store. The UI section 205 is a remote control, keyboard, mouse and the like, and receives a change command for changing reception-side user setting information by operation of the user. The user setting information managing section 206 generates reception-side user setting information based on the change command received in the UI section 205 and the transmission-side user setting information to output to the image quality information managing section 207.

The image quality information managing section 207 reproduces the transmission-side image quality information based on the reception-side user setting information and the transmission-side image quality information, and outputs the information to the image tone reflecting section 204. The image tone reflecting section 204 makes image quality adjustments based on the image data in the display plane section 203 and the reception-side image quality information to display in the display section 209. The panel information managing section 208 sets the reception-side panel information based on the transmission-side panel information to output to the display section 209. Thus, the display screen of the screen data transmitting terminal 100 is reproduced and displayed in the screen data receiving terminal 200. The remote-control control section 210 transmits remote control by the operator received in the UI section 205 to the screen data transmitting terminal 100.

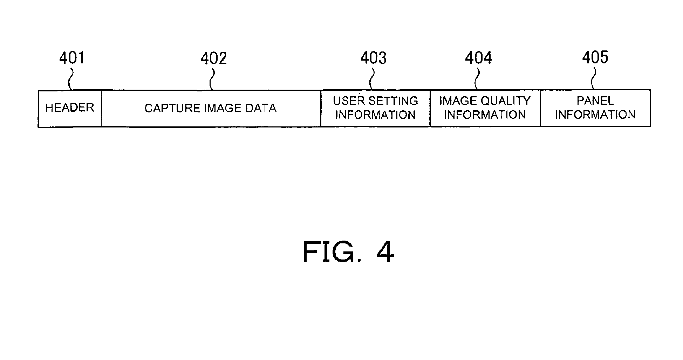

FIG. 4 is a diagram showing a transmission packet example of screen data transmitted between the communication section 114 in the screen data transmitting terminal 100 and the communication section 201 in the screen data receiving terminal 200. As shown in FIG. 4, the transmission packet is comprised of a header information portion 401, original image data portion 402 (capture image data), user setting information portion 403, image quality information portion 404 and panel information portion 405. The header information portion 401 is a TCP header including control information such as an address indicating a destination and the like. The original image data portion 402 includes the original image data to transmit. The user setting information portion 403 includes the transmission-side user setting information. The image quality information portion 404 includes the transmission-side image-quality setting information. The panel information portion 405 includes the transmission-side panel setting information. In addition, in the above-mentioned example, the capture image data, user setting information, image quality information and panel information is collectively transmitted, but each of the information may be transmitted separately. Further, any kinds of information may be combined to collectively transmit, such as transmitting the capture image data and user setting information collectively.

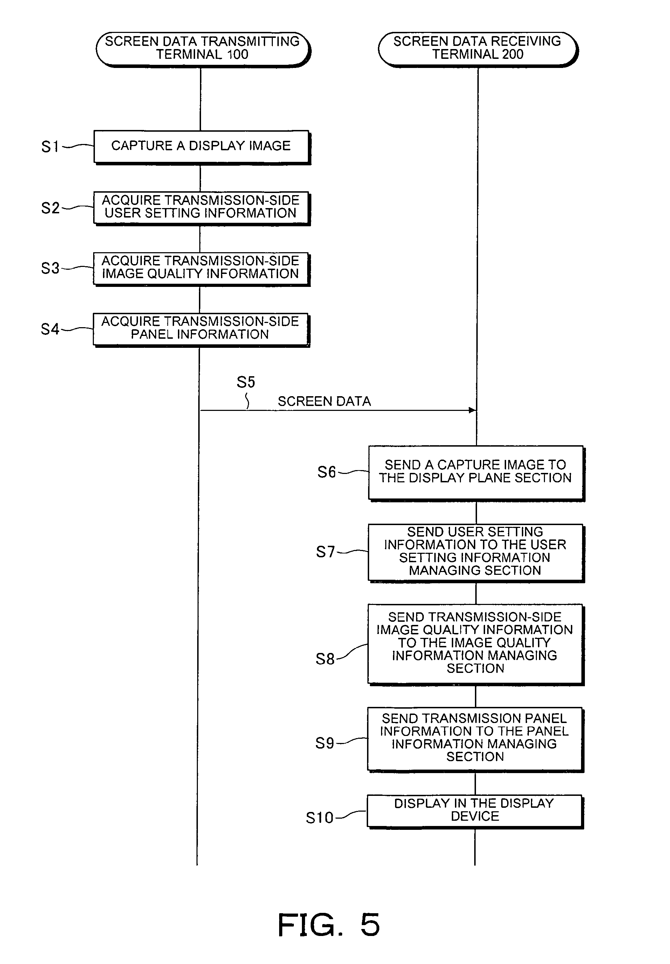

Described next is the flow of screen data transmission processing and reception processing in the screen data transmitting terminal 100 and screen data receiving terminal 200. FIG. 5 is a sequence chart showing the characteristic operations of the screen data transmitting terminal 100 and screen data receiving terminal 200. Each step will be described below.

First, the capture section 105 in the screen data transmitting terminal 100 captures original image data sent to the display plane section 104 from the image generating section 103 (step S1). Next, the screen data managing section 113 acquires the transmission-side user setting information from the user setting information managing section 108 (step S2), and outputs the transmission-side user setting information to the communication section 114. The screen data managing section 113 acquires the transmission-side image quality information from the image quality information managing section 109, and outputs the transmission-side image quality information to the communication section 114 (step S3). Then, the screen data managing section 113 acquires the transmission-side panel information from the panel information managing section 111 to output to the communication section 114 (step S4).

Next, the communication section 114 transmits to the screen data receiving terminal 200 the captured original image data, transmission-side user setting information, transmission-side image quality information and transmission-side panel information as the screen data, and the screen data receiving terminal 200 receives the screen data (step S5).

The screen data receiving terminal 200 sends the image data to the display plane section 203 based on the received screen data (step S6), and further sends the transmission-side user setting information to the user setting information managing section 206 (step S7). Then, based on the received screen data, the transmission-side image-quality setting information is output to the image quality information managing section 207 (step S8), and the transmission-side panel setting information is output to the panel information managing section 208 (step S9). Next, based on the information in the image tone reflecting section 204 and panel information managing section 208, the terminal 200 displays the reproduced screen in the display section 209 (step S10).

By executing the above-mentioned flow whenever a display frame of the screen data transmitting terminal 100 is updated, the screen data receiving terminal 200 is capable of reproducing the same screen display as in the screen data transmitting terminal 100.

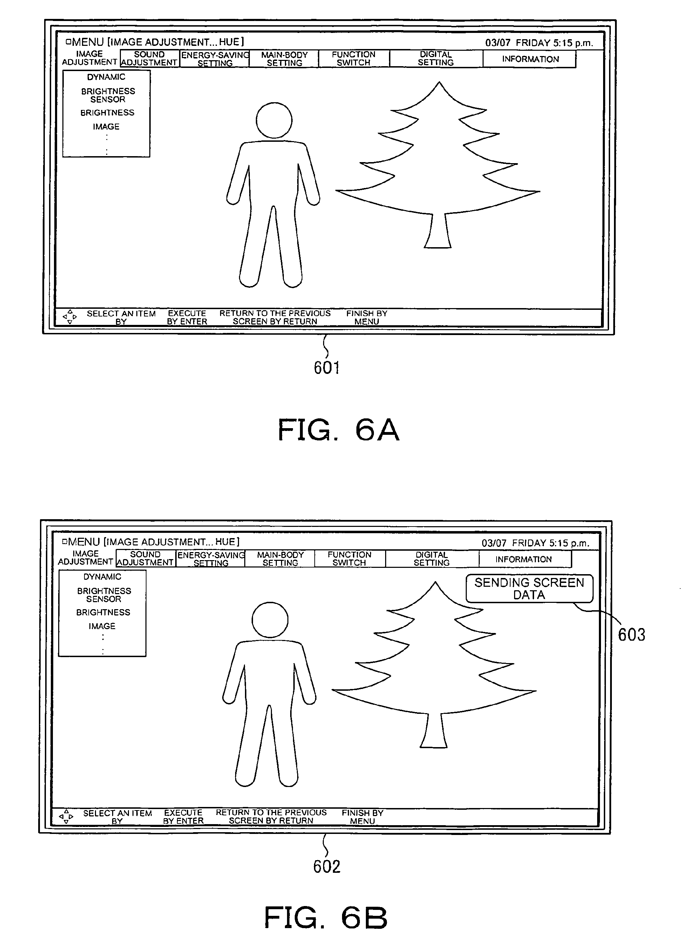

A screen display example will be described below. FIG. 6A is a screen example 601 displayed in the screen data transmitting terminal 100. Further, the screen data transmitting terminal 100 may provide an area 603 to display that the screen data is being transmitted in part of screen display as shown in FIG. 6B as a screen example 602.

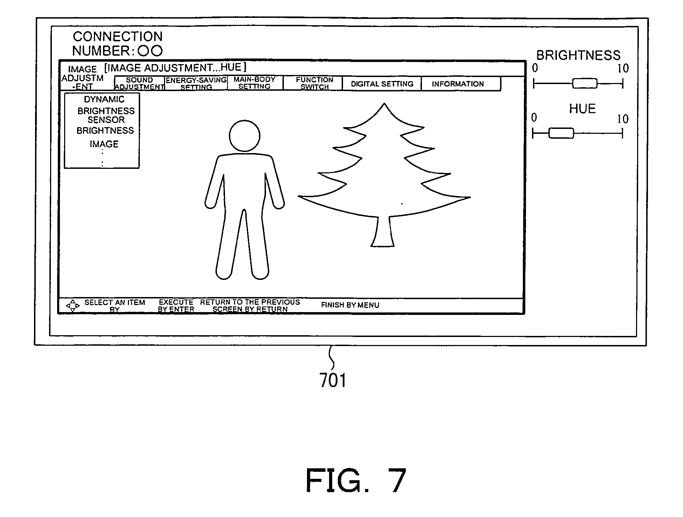

Meanwhile, the screen data receiving terminal 200 receives the screen data, and reproduces the screen in the display section 209. FIG. 7 is a screen example 701 displayed in the screen data receiving terminal 200. As shown in the screen example 701, a display screen received from the screen data transmitting terminal 100 is displayed to be smaller than the entire screen. Then, a connection number is displayed in the top of the screen, and adjustment bars of brightness and hue for editing of the reproduced screen are displayed in the top-right of the screen.

### [Embodiment 2]

In the above-mentioned Embodiment, the screen data transmitting terminal 100 transmits to the screen data receiving terminal 200 the captured original image data, transmission-side user setting information, transmission-side image quality information and transmission-side panel information as the screen data, and another constitution may be performed such that the captured original image data and transmission-side user setting information is transmitted as the screen data without transmitting the transmission-side image quality information and transmission-sidepanelinformation. By this means, it is possible to reproduce the screen displayed in the transmission-side terminal in the reception-side terminal without undergoing effects of unnecessary information such as the panel state, etc. As a result, it is possible to reproduce the same screen and to find an error in user setting.

When the apparatuses of the same configuration are used in the screen data transmitting terminal 100 and screen data receiving terminal 200, the screen data transmitting terminal 100 transmits the captured original image and transmission-side user setting information to the screen data receiving terminal 200, and by changing the reception-side user setting information, the same screen display is actualized in the screen data transmitting terminal 100 and screen data receiving terminal 200. Further, when different models are used in the screen data transmitting terminal 100 and screen data receiving terminal 200, by using the above-mentioned method, it is possible to confirm an obvious error (such as reddish screen display, etc.) in the transmission-side user setting information in the screen data transmitting terminal 100.

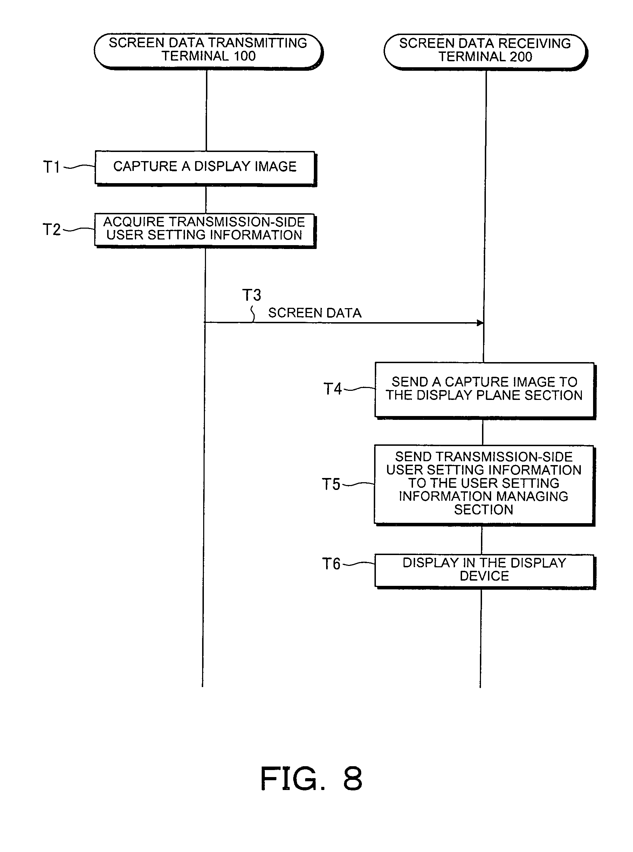

Described next is the flow of processing in the screen data transmitting terminal 100 and screen data receiving terminal 200 according to Embodiment 2. FIG. 8 is a flowchart showing the flow of screen data transmission processing and reception processing in the screen data transmitting terminal 100 and screen data receiving terminal 200. Each step will be described below.

First, the capture section 105 in the screen data transmitting terminal 100 captures image data sent to the display plane section 104 from the image generating section 103 (step T1). Next, the screen data managing section 113 acquires the transmission-side user setting information from the user setting information managing section 108 (step T2) to output to the communication section 114. The communication section 114 transmits the captured original image data and user setting information as the screen data to the communication section 201 in the screen data receiving terminal 200, and the communication section 201 acquires the screen data (step T3).

The image generating section 202 outputs the captured original image data to the display plane section 203 based on the screen data captured through the communication section 201 (step T4) to store the image data in the display plane section 203. Next, the image generating section 202 outputs the transmission-side user setting information to the user setting information managing section 206 (step T5). Then, the screen data receiving terminal 200 displays the screen displayed in the screen data transmitting terminal 100 (step T6). By this means, it is possible to reproduce the same screen as the screen on the transmission side and to find an obvious error in user setting, etc.

In addition, the Embodiments disclosed in the forgoing are illustrative, and the invention is not limited to the scope of the Embodiments. In the above-mentioned example, the screen data transmitting terminal 100 transmits the capture screen data to the screen data receiving terminal 200 on a frame-by-frame basis, but in the case where a change amount is small in the captured original image data, the terminal 100 may transmit the data only when the captured original image data changes so as to save the communication band. Further, the screen setting information may be transmitted only when the information changes.

## Claims

1. A screen data transmitting terminal for transmitting data of a display screen, **characterized by** having a transmission-side image tone reflecting section that reflects user setting information set by a user in an image tone of received original image data, a transmission-side display section that displays a screen in which the user setting information is reflected, and a transmission-side screen data managing section that acquires the user setting information,
wherein the transmission-side screen data managing section transmits the original image data and the acquired user setting information so as to enable a terminal of a transmission destination to reproduce the display screen using the transmitted original image data and user setting information.

2. The screen data transmitting terminal according to claim 1, **characterized in that** the transmission-side image tone reflecting section reflects image quality information for determining image quality and panel information for determining characteristics of a panel for screen display in the image tone of the original image data, and that the transmission-side screen data managing section acquires the image quality information and the panel information, and transmits the original image data, the acquired user setting information, the image quality information and the panel information.

3. The screen data transmitting terminal according to claim 1 or 2, **characterized by** further having a display plane section that temporarily stores the original image data, and a capture section that captures the stored original image data.

4. The screen data transmitting terminal according to claim 3, **characterized by** further having an image compression section that compresses the captured original image data.

5. The screen data transmitting terminal according to any one of claims 1 to 4, **characterized in that** the transmission-side screen data managingsection managestiming of transmitting the original image data and the acquired user setting information.

6. The screen data transmitting terminal according to any one of claims 1 to 5, **characterized in that** the transmission-side screen data managing section displays that the original image data and the acquired user setting information is being transmitted in the transmission-side display section during transmission of the original image data and the acquired user setting information.

7. A screen data receiving terminal for receiving data of a display screen of a screen data transmitting terminal, **characterized by** having a reception-side communication section that receives original image data received in the screen data transmitting terminal and user setting information set by a user in the screen data transmitting terminal, a reception-side image tone reflecting section that reflects the user setting information in an image tone of the original image data, and a reception-side display section that displays a screen in which the user setting information is reflected, and enabling the display screen of the screen data transmitting terminal to be reproduced.

8. The screen data receiving terminal according to claim 7, **characterized in that** the reception-side communication section receives image quality information and panel information of the screen data transmitting terminal, and that the reception-side image tone reflecting section reflects the image quality information for determining image quality and the panel information for determining characteristics of a panel for screen display in the image tone of the original image data based on the received information.

9. A screen data transmission system **characterized by** having the screen data transmitting terminal according to any one of claims 1 to 6, and the screen data receiving terminal according to claim 7 or 8,
wherein the screen data transmitting terminal undergoes remote control from the screen data receiving terminal.

10. A screen data transmitting program for transmitting data of a display screen, **characterized by** causing a screen data transmitting terminal to execute processing for acquiring user setting information set by a user, and processing for transmitting received original image data and the acquired user setting information,
wherein the program enables a screen data receiving terminal to reproduce the display screen using the transmitted original image data and user setting information.

11. A screen data receiving program for receiving data of a display screen of a screen data transmitting terminal, **characterized by** causing a screen data receiving terminal to execute processing for receiving original image data received in the screen data transmitting terminal and user setting information set by a user in the screen data transmitting terminal, processing for reflecting the user setting information in an image tone of the original image data, and processing for displaying a screen in which the user setting information is reflected,
wherein the program enables the display screen of the screen data transmitting terminal to be reproduced.

12. A screen data transmitting method of transmitting data of a display screen in a screen data transmitting terminal, **characterized by** including a step of acquiring user setting information set by a user, and a step of transmitting received original image data and the acquired user setting information,
wherein the method enables a screen data receiving terminal to reproduce the display screen using the transmitted original image data and user setting information.

13. A screen data receiving method of receiving data of a display screen of a screen data transmitting terminal in a screen data receiving terminal, **characterized by** including a step of receiving original image data received in the screen data transmitting terminal and user setting information set by a user in the screen data transmitting terminal, a step of reflecting the user setting information in an image tone of the original image data, and a step of displaying a screen in which the user setting information is reflected,
wherein the method enables the display screen of the screen data transmitting terminal to be reproduced.
